# EUROPÄISCHE PATENTSCHRIFT

(11) **EP 4 023 337 B1**
(45) Veröffentlichungstag und Bekanntmachung des Hinweises auf die Patenterteilung: **06.11.2024**
(21) Anmeldenummer: 21217806.5
(22) Anmeldetag: 27.12.2021
(51) Int. Cl.: B01L 3/00, B01L 9/00, F16K 99/00

(54) **ANALYSESYSTEM**
ANALYSIS SYSTEM
SYSTÈME D'ANALYSE

(30) Priorität: 29.12.2020 DE 102020135053
(43) Veröffentlichungstag der Anmeldung: 06.07.2022
(73) Patentinhaber: BiFlow Systems GmbH, 09126 Chemnitz (DE)
(72) Erfinder: Nestler, Jörg, 09112 Chemnitz (DE)
(74) Vertreter: Steiniger, Carmen

(56) Entgegenhaltungen:
- WO-A1-2020/027564
- DE-A1- 102014 117 976
- DE-A1- 102018 210 069
- US-A1- 2015 375 226
- US-A1- 2016 129 437

## Beschreibung

Die vorliegende Erfindung betrifft ein Analysesystem, das eine Mikrofluidikvorrichtung mit einer Mikrostruktur, die wenigstens einen Fluideingang, wenigstens einen Fluidausgang, wenigstens einen zwischen dem wenigstens einen Fluideingang und dem wenigstens einen Fluidausgang verlaufenden Fluidkanal und wenigstens einen Mikroaktor zum Bewegen wenigstens eines Fluids durch den wenigstens einen Fluidkanal aufweist, und einer Hülle, in der die Mikrostruktur angeordnet ist, und ein Ansteuer- und/oder Auslesegerät für die Mikrofluidikvorrichtung aufweist.

Aus dem Stand der Technik sind miniaturisierte Systeme zur Analyse von Fluiden, vorzugsweise Flüssigkeiten, die im Allgemeinen als "Labor auf einem Chip" oder "Lab-on-a-Chip" bezeichnet werden, bekannt. Anwendungsgebiete solcher Systeme umfassen beispielsweise die Humandiagnostik, die Veterinärdiagnostik sowie die Umwelt- und Lebensmittelanalytik. Die Systeme weisen beispielsweise eine Mikrostruktur auf, in die Flüssigkeiten eingebracht werden können und in der diese Flüssigkeiten innerhalb wenigstens eines Fluidkanals befördert und/oder in wenigstens einem Fluidreservoir gehalten werden können. Oft weisen solche Systeme auch einen Sensorbereich auf, der für die eigentliche Analytik zuständig ist.

Für die Analyse einer Probe ist es häufig erforderlich, Flüssigkeiten definiert zu transportieren. Dies kann sowohl über eine externe Aktorik, die zum Beispiel pneumatisch, mechanisch oder über externe Pumpen arbeitet, als auch über eine Aktorik, die Bestandteil des Fluidikteils ist, erfolgen.

Ein Beispiel für eine solche, in eine flüssigkeitsführende Mikrostruktur integrierte Aktorik ist in der Druckschrift EP 1 844 936 A1 beschrieben. Der beschriebene Mikroaktor nutzt Hydrogel, das eine Aktorflüssigkeit, wie Wasser, absorbiert und mit Elektroden kontaktiert ist, durch die in der Aktorflüssigkeit eine Elektrolyse ausgelöst werden kann. Die sich bei der Elektrolyse bildenden Sauerstoff- und Wasserstoffblasen führen zu einem Gasdruck, welcher auf eine Membran des Mikroaktors wirkt, durch deren Auswölben wiederum ein Fluid in einem an der anderen Seite der Membran verlaufenden Kanal oder Reservoir der Mikrostruktur verdrängt werden oder der Kanal verschlossen werden kann.

Die für die Umsetzung des Aktorprinzips notwendigen Aktorkomponenten sind dadurch auf kleinstem Raum integrierbar, was es beispielsweise ermöglicht, eine Aktor- und Sensorkomponenten aufweisende Mikrofluidikvorrichtung in EC-Kartengröße auszubilden.

Wie in der Druckschrift WO 2012/069527 A2 beschrieben, sind Mikrostrukturen bekannter Mikrofluidikvorrichtungen beispielsweise als Spritzgussteil ausgebildet. Solche Spritzgussteile können einteilig ausgebildet oder mehrteilig ausgebildet und miteinander verschweißt oder verklebt sein. Die jeweilige Mikrostruktur kann bis auf einen Fluideingang und einen Fluidausgang verschlossen sein oder mit Folie oder einem Deckel abdeckbare Kanalstrukturen aufweisen. Weist die jeweils verwendete Mikrostruktur einen Leiterbahnträger mit elektrisch leitenden Strukturen auf, ist sie meist in ein Gehäuse eingebracht und/oder zumindest teilweise vergossen.

Aus der Druckschrift DE 10 2014 117 976 A1 ist eine Fluidikvorrichtung mit einem mittels einer Klebeschicht, deren Klebewirkung durch Erwärmung oder elektromagnetische Strahlung aufhebbar ist, realisierten Fluidventil beschrieben.

In der Druckschrift US 2016/129437 A1 ist eine Kassette offenbart, die eine Hülle mit einer darin eingebrachten Fluidleitstruktur aufweist. Die Kassette kann zur Auswertung in ein Bearbeitungsinstrument eingebracht werden, in welchem u. a. Sensoren vorgesehen sind, mit welchen Zustände innerhalb der Kassette ausgelesen werden können, die dann durch LEDs angezeigt werden können.

In bekannte mikrofluidische Kartuschen ist häufig ein Reststoffreservoir integriert, in welches Flüssigkeit geleitet wird, die nicht für die Analyse benötigt oder verbraucht ist. Um eine größere Menge an Flüssigkeit analysieren zu können, müssen das Reststoffreservoir und damit das jeweilige Spritzgussteil sowie der Leiterbahnträger entsprechend groß gestaltet werden, was man eigentlich vermeiden möchte. Außerdem erhöhen sich hierdurch die Kosten der Kartusche.

Es ist daher die Aufgabe der vorliegenden Erfindung, ein Analysesystem mit einer Mikrofluidikvorrichtung zur Verfügung zu stellen, die zur Aufnahme größerer Flüssigkeitsmengen geeignet ist und bei der die Mikrostruktur trotzdem klein gestaltet werden kann.

Die Aufgabe wird durch ein Analysesystem gelöst, das eine Mikrofluidikvorrichtung mit einer Mikrostruktur, die wenigstens einen Fluideingang, wenigstens einen Fluidausgang, wenigstens einen zwischen dem wenigstens einen Fluideingang und dem wenigstens einen Fluidausgang verlaufenden Fluidkanal und wenigstens einen Mikroaktor zum Bewegen wenigstens eines Fluids durch den wenigstens einen Fluidkanal aufweist, und einer Hülle, in der die Mikrostruktur angeordnet ist, und ein Ansteuer- und/oder Auslesegerät für die Mikrofluidikvorrichtung aufweist, wobei die Mikrostruktur eine thermisch in ihren Klebeeigenschaften beeinflussbare Deckfolie aufweist, die Mikrofluidikvorrichtung wenigstens ein mittels der Deckfolie ausgebildetes thermisch aktivierbares Ventil aufweist, über dem in der Hülle eine Wärme- und/oder Lichtdurchgangsöffnung ausgebildet ist, die Hülle eine an das Ansteuer- und/oder Auslesegerät angepasste Außenkontur aufweist, die Mikrostruktur fest an einer definierten Position in der Hülle fixiert ist und das Ansteuer- und/oder Analysegerät wenigstens eine über der jeweiligen Wärme- und/oder Lichtdurchgangsöffnung anordenbare oder angeordnete, Licht emittierende Diode aufweist, wobei wobei der wenigstens eine Fluidausgang in wenigstens einen Reststoffbehälter mündet, der separat von der Mikrostruktur ausgebildet ist und in der Hülle angeordnet ist, wobei der wenigstens eine Reststoffbehälter ein Beutel ist und in der Hülle, neben der Mikrostruktur ein Leerraum ausgebildet ist, in den sich der Beutel bei dessen Befüllung ausbreitet; oder wobei der wenigstens eine Fluidausgang in wenigstens einen Reststoffbehälter mündet, der separat von der Mikrostruktur ausgebildet ist, wobei der Reststoffbehälter ein feste Abmessungen aufweisender Mikrokanister oder ein fester Hohlraum als Bestandteil der Hülle ist und wobei der wenigstens eine Reststoffbehälter wenigstens eine Entlüftungsöffnung aufweist.

Die Mikrofluidikvorrichtung bildet zusammen mit dem Ansteuer- und/oder Auslesegerät das Analysesystem aus. Dadurch dass die Mikrostruktur fest an einer definierten Position in der Hülle fixiert ist und zusätzlich die Hülle eine an das Ansteuer- und/oder Auslesegerät des Analysesystems angepasste Außenkontur aufweist, kann eine falsche, wie beispielsweise eine verdrehte, Einbringung der Mikrofluidikvorrichtung in das Ansteuer-und/oder Auslesegerät verhindert werden.

Indem die Mikrostruktur eine thermisch in ihren Klebeeigenschaften beeinflussbare Deckfolie und die Hülle wenigstens eine Wärme- und/oder Lichtdurchgangsöffnung aufweist, können in der Mikrofluidikvorrichtung thermisch aktivierbare Ventile ausgebildet werden.

Da das Ansteuer- und/oder Analysegerät wenigstens eine über der jeweiligen Wärme-und/oder Lichtdurchgangsöffnung angeordnete oder anordenbare, Licht emittierende Diode (LED) aufweist, kann ein mittels der thermisch in ihrer Klebkraft veränderbaren Deckfolie der Mikrostruktur ausgebildetes thermisch aktivierbares Ventil der Mikrofluidikvorrichtung, über dem in der Hülle eine Wärme- und/oder Lichtdurchgangsöffnung ausgebildet ist, einfach von außen geöffnet werden,

Die Mikrofluidikvorrichtung des Analysesystems ist in ihrer Handhabung besonders sicher, wenn, gemäß einer vorteilhaften Ausführungsform des Analysesystems, ein Verschluss des Fluideingangs in der Hülle sitzt.

Dabei ist es besonders von Vorteil, wenn oberhalb des Fluideingangs der Mikrostruktur in der Hülle eine Hülleneingangsöffnung mit einer mittels eines Scharniers klappbaren Verschlussklappe ausgebildet ist, wobei die Verschlussklappe den Eingangsverschluss aufweist, der als Gegenstück zu dem Fluideingang ausgebildet und direkt auf den Fluideingang aufsetzbar ist.

Wenn die Hülle wenigstens eine geometrische Referenz für eine Positionierung der Mikrostruktur aufweist, kann die sich in der Hülle befindliche Mikrostruktur beispielsweise hochgenau gegenüber einem Ansteuer- und/oder Auslesegerät für einen Sensor der Mikrostruktur angeordnet werden. Es kann also eine Toleranzkette von der Mikrostruktur über die Hülle bis hin zu jeweils verwendeten dem Ansteuer- und/oder Auslesegerät hergestellt werden, die hochgenaue und hochreproduzierbare Auslesungen ermöglicht. Als geometrische Referenz kann/können Stege im Inneren der Hülle oder eines Hüllenoberteils und/oder wenigstens eine Ausnehmung im Inneren der Hülle oder eines Hüllenoberteils und/oder wenigstens eine Öffnung in der Hülle oder in einem Hüllenoberteil und eine jeweils dazu gehörige markante Stelle der Mikrostruktur und/oder bestimmte Randgestaltungen der Hülle oder eines Hüllenoberteils dienen.

Vorzugsweise ist in wenigstens einem Innenbereich der Hülle wenigstens eine Positionierhilfe für die Mikrostruktur ausgebildet. Dadurch kann die Mikrostruktur an einer definierten Position innerhalb der Hülle angeordnet und dort fixiert werden.

Ein vorteilhafter Zusammenbau der Mikrofluidikvorrichtung mit zusätzlicher geometrischer Referenz ergibt sich, wenn die Hülle aus einem Hüllenunterteil und einem dazu verdrehsicher ausgebildeten Hüllenoberteil zusammengesetzt ist.

Die Außenkontur der Hülle kann beispielsweise dadurch an das Ansteuer- und/oder Auslesegerät angepasst werden, dass außen an dem Hüllenoberteil unterschiedlich hohe und/oder dicke Ränder und/oder Auskragungen ausgebildet sind. Wenn derartige Auskragungen und/oder Ränder an dem Hüllenoberteil vorgesehen sind und darüber hinaus die Mikrostruktur definiert und positionsfest in das Hüllenoberteil eingepresst ist, ergibt sich eine vorteilhafte Toleranzkette bezüglich der Positionierung der Mikrofluidikvorrichtung in dem Ansteuer- und/oder Auslesegerät in Bezug auf die Positionierungstoleranz zu einem vorzugsweise optisch auslesbaren Sensor der Mikrostruktur und/oder wenigstens einem thermisch aktivierbaren Ventil der Mikrostruktur.

In einer weiteren vorteilhaften Ausführungsform des Analysesystems weist die Mikrostruktur wenigstens einen in Kontakt mit dem wenigstens einen Fluid bringbaren, optisch auslesbaren Sensor auf, und die Hülle ist wenigstens an der Stelle, an der sich dieser Sensor befindet, transparent oder weist dort eine Durchgangsöffnung auf.

Mit dem wenigstens einen Sensor können physikalische und/oder chemische und/oder biologische Eigenschaften bzw. Parameter des wenigstens einen, in die Mikrofluidikvorrichtung eingebrachten Fluids bestimmt werden.

Indem bei dieser Ausführungsform der wenigstens eine Sensor optisch auslesbar und die Hülle wenigstens an der Stelle, an der sich dieser Sensor befindet, transparent ist, kann der Sensor einfach ausgelesen werden, ohne die Hülle öffnen zu müssen. Alternativ kann die Hülle wenigstens an der Stelle, an der sich der Sensor befindet, eine Durchgangsöffnung aufweisen.

In einer Ausführungsform des Analysesystems mündet der wenigstens eine Fluidausgang in wenigstens einen Reststoffbehälter, der separat von der Mikrostruktur ausgebildet ist und in der Hülle angeordnet ist, wobei der wenigstens eine Reststoffbehälter ein Beutel ist und in der Hülle, neben der Mikrostruktur ein Leerraum ausgebildet ist, in den sich der Beutel bei dessen Befüllung ausbreitet.

Der wenigstens eine Reststoffbehälter ist nicht Bestandteil der Mikrostruktur und kann damit groß genug ausgebildet werden, ohne die Mikrostruktur zu vergrößern. Entsprechend kann die Mikrostruktur klein und preiswert ausgebildet werden.

Der wenigstens eine Reststoffbehälter ist wie die Mikrostruktur innerhalb der Hülle untergebracht und damit durch diese geschützt. Von dem wenigstens einen Reststoffbehälter aufgenommenes Fluid ist damit sicher verwahrt.

Der wenigstens eine Reststoffbehälter ist mit dem wenigstens einen Fluidausgang fest verbunden, sodass fluide Reststoffe sicher in den wenigstens einen Reststoffbehälter geleitet werden.

Der wenigstens eine Reststoffbehälter ist in dieser Ausführungsform des Analysesystems ein Beutel. Der Beutel besteht aus einem auffaltbaren Material. Damit ist es möglich, dass der Beutel zunächst auf kleinem Raum zusammengelegt in der Hülle angeordnet werden kann, wobei er sich Stück für Stück aufbläht, wenn Reststofffluid in ihn geleitet wird.

Damit sich der Beutel geeignet innerhalb der Hülle ausbreiten kann, ist vorzugsweise in der Hülle, neben der Mikrostruktur ein Leerraum vorgesehen.

Wenn der wenigstens eine Reststoffbehälter beispielsweise ein Beutel ist, ist er vorzugsweise bis auf den darin mündenden Fluidausgang vollumfänglich geschlossen, sodass aus ihm nichts entweichen kann.

Alternativ kann der wenigstens eine Reststoffbehälter auch ein anderes Fluidaufnahmereservoir, wie beispielsweise ein feste Abmessungen aufweisender Mikrokanister oder ein fester Hohlraum als Bestandteil der Hülle, sein.

In diesem Fall kann der wenigstens eine Reststoffbehälter wenigstens eine Entlüftungsöffnung aufweisen, durch die Luft aus dem Inneren des Reststoffbehälters entweichen kann, während der Reststoffbehälter mit Reststofffluid gefüllt wird. Vorzugsweise mündet die Entlüftungsöffnung in einen Hülleninnenraum. Es ist zudem von Vorteil, wenn die wenigstens eine Entlüftungsöffnung auf einer anderen Seite des Reststoffbehälters als der in den Reststoffbehälter mündende Fluidausgang, wie beispielsweise auf einer dem Fluidausgang gegenüber liegenden Seite des Reststoffbehälters, angeordnet ist.

Das von dem Reststoffbehälter aufgenommene Fluid kann gut in dem Reststoffbehälter gehalten werden, ohne dass es zurück in den wenigstens einen Fluidkanal fließt, wenn in dem wenigstens einen Reststoffbehälter wenigstens ein fluidabsorbierendes Material angeordnet ist. Das wenigstens eine fluidabsorbierende Material kann das Fluid aufsaugen und hält es damit fest. Das wenigstens eine fluidabsorbierende Material kann beispielsweise wenigstens ein Schwamm und/oder wenigstens ein Gel und/oder Watte und/oder Zellstoff und/oder wenigstens ein Textil und/oder wenigstens ein anorganisches poröses Material und/oder wenigstens ein organisches poröses Material sein.

Alternativ oder in Ergänzung zu dem Einsatz von fluidabsorbierendem Material in dem Reststoffbehälter ist in einer vorteilhaften Ausführungsform der Erfindung in dem wenigstens einen Fluidkanal, vorzugsweise kurz vor dem wenigstens einen Fluidausgang, ein Rückflussverhinderer, wie beispielsweise eine Rückschlagklappe, angeordnet.

Besonders günstig ist es, wenn die Mikrostruktur einen Leiterbahnträger aufweist. Dadurch können elektrische Komponenten der Mikrofluidikvorrichtung einfach kontaktiert und miteinander sinnvoll verbunden werden. Der Leiterbahnträger kann zudem die weiteren Lagen und/oder Komponenten der Mikrostruktur mechanisch stützen und/oder eine vorteilhafte untere Abdeckung von in der Mikrostruktur enthaltenen Kavitäten und/oder Fluidkanälen ausbilden.

In einer favorisierten Ausführungsform des erfindungsgemäßen Analysesystems trägt der Leiterbahnträger Elektroden und weist der wenigstens eine Mikroaktor eine mit den Elektroden elektrisch verbundene Aktorflüssigkeit und eine in Kontakt mit dem wenigstens einen Fluid bringbare, dehnbare Membran auf, durch die ein jeweiliger Innenquerschnitt des wenigstens einen Fluidkanals und/oder wenigstens eines Fluidreservoirs der Mikrostruktur und/oder wenigstens einer Kavität der Mikrostruktur veränderbar ist. Der Mikroaktor kann somit als Pumpe und/oder als Ventil verwendet werden.

Vorzugsweise weist die Hülle wenigstens eine Öffnung für einen Zugang zu wenigstens einem Ventil der Mikrostruktur und/oder zur elektrischen Kontaktierung des wenigstens einen Mikroaktors und/oder wenigstens eines Heizers der Mikrofluidikvorrichtung und/oder eines Sensors der Mikrostruktur auf.

Um insbesondere den Mikroaktor vorteilhaft von außen, durch die Hülle elektrisch kontaktieren zu können, ist es günstig, wenn der Leiterbahnträger Elektroden trägt, die von einer Rückseite des Leiterbahnträgers kontaktierbar sind.

In einer vorteilhaften Ausführungsform des Analysesystems auf einer Vorderseite des Leiterbahnträgers eine erste Klebefolie aufgebracht ist, auf die die Aktormembran aufgeklebt ist, auf der wiederum eine zweite Klebefolie aufgebracht ist, auf der ein Fluidikteil, das den wenigstens einen Fluidkanal und wenigstens ein Fluidreservoir und/oder wenigstens eine Kavität aufweist, klebt.

Bevorzugte Ausführungsformen der erfindungsgemäßen Mikrofluidikvorrichtung, deren Aufbau, Funktion und Vorteile sind im Folgenden anhand von Figuren näher erläutert, wobei
- Figur 1: schematisch einen Ausschnitt einer bei dem erfindungsgemäßen Analysesystem einsetzbaren Mikrofluidikvorrichtung im Querschnitt zeigt;
- Figur 2: eine Explosionsdarstellung einer bei dem erfindungsgemäßen Analysesystem einsetzbaren Mikrofluidikvorrichtung zeigt;
- Figur 3: schematisch eine Mikrostruktur der Mikrofluidikvorrichtung aus Figur 2 in einer perspektivischen Ansicht von oben zeigt;
- Figur 4: schematisch das Hüllenunterteil der Mikrofluidikvorrichtung aus Figur 2 mit der Mikrostruktur aus Figur 4 in einer perspektivischen Ansicht von oben zeigt;
- Figur 5: schematisch das Hüllenunterteil, die Mikrostruktur und einen Reststoffbehälter der Mikrofluidikvorrichtung aus Figur 2 in einer perspektivischen Ansicht von oben zeigt; und
- Figur 6: schematisch ein Hüllenoberteil der Mikrofluidikvorrichtung aus Figur 2 mit der Mikrostruktur aus Figur 3 in einer perspektivischen Ansicht von unten zeigt;
- Figur 7: schematisch ein Hüllenunterteil der Mikrofluidikvorrichtung aus Figur 2 in einer perspektivischen Ansicht von unten zeigt.

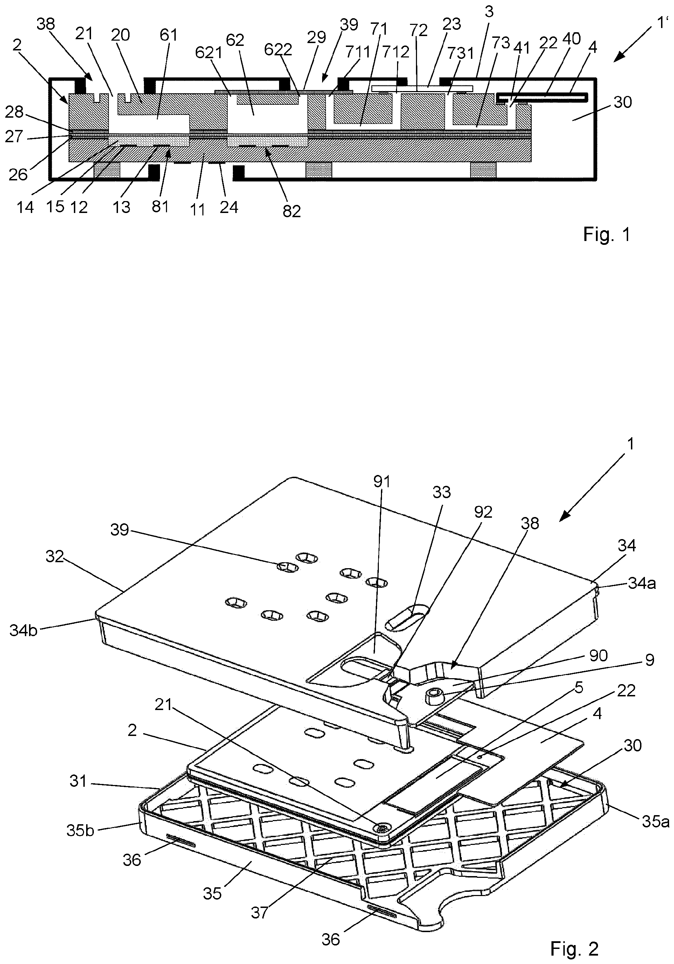

Figur 1 zeigt schematisch einen Ausschnitt einer bei dem erfindungsgemäßen Analysesystem einsetzbaren Mikrofluidikvorrichtung 1' im Querschnitt, wobei in Figur 1 nur einzelne Komponenten der Mikrofluidikvorrichtung 1' dargestellt sind, um deren Funktionsprinzip zu erläutern.

Die Mikrofluidikvorrichtung 1' weist eine Mikrostruktur 2 auf, die sich in einer Hülle 3 befindet.

Die Mikrostruktur 2 weist ein Fluidikteil 20 auf, das in der gezeigten Ausführungsform als Spritzgussteil aus Kunststoff ausgebildet ist. Das Innere des Fluidikteils 20 ist von außen über einen Fluideingang 21 und einen Fluidausgang 22 zugänglich. Der Fluideingang 21 ist über eine darüber befindliche, mit einem beispielsweise in Figur 2 gezeigten Eingangsverschluss 9 verschließbare Hülleneingangsöffnung 38 zugänglich.

In dem Fluidikteil 20 befindet sich wenigstens ein Fluidkanal 71, 72, 73 sowie wenigstens ein Fluidreservoir 61, 62 und/oder wenigstens eine Kavität.

Mit dem Fluidausgang 22 ist ein Reststoffbehälter 4 in fluider Verbindung. Der Reststoffbehälter 4 ist in dem gezeigten Ausführungsbeispiel ein Beutel, der sich in einem Leerraum 30 innerhalb der Hülle 3 befindet und sich darin ausbreiten kann.

In dem Reststoffbehälter 4 befindet sich in der gezeigten Ausführungsform ein fluidabsorbierendes Material 40, dieses kann jedoch in anderen Ausführungsformen der Erfindung auch weggelassen werden.

Der Fluideingang 21 mündet in das Fluidreservoir 61 der Mikrostruktur 2. In das Fluidreservoir 61 kann wenigstens ein fluidaufsaugendes Material, wie beispielsweise ein Schwamm, eingebracht sein. Dadurch kann das Fluidreservoir 61 als Eingangsfilter, z. B. zum Filtern partikulärer Bestandteile eines in die Mikrostruktur 2 eingebrachten Fluids, genutzt werden. Dabei kann die Saugfähigkeit des fluidaufsaugenden Materials innerhalb des Fluidreservoirs 61 gestaffelt sein. Das Fluidreservoir 61 kann jedoch auch vor Fluidaufnahme leer sein.

Unter dem Fluidreservoir 61 befindet sich ein Mikroaktor 81. Der Mikroaktor 81 weist eine Aktormembran 27 auf, die in dem gezeigten Ausführungsbeispiel einen Boden des Fluidreservoirs 61 bildet. Ferner weist der Mikroaktor 81 ein Reservoir 15 auf, in dem sich eine Aktorflüssigkeit 14 befindet. Die Aktorflüssigkeit 14 kann beispielsweise von einem Hydrogel aufgenommen sein, das sich in dem Reservoir 15 befindet. Darüber hinaus weist der Mikroaktor 81 Elektroden 12, 13 auf, die die Aktorflüssigkeit 14 elektrisch kontaktieren. Die Elektroden 12, 13 befinden sich auf einem Leiterbahnträger 11, die Bestandteil der Mikrostruktur 2 ist.

Die Mikrostruktur 2 weist in dem gezeigten Ausführungsbeispiel einen weiteren Mikroaktor 82 auf, der ähnlich oder gleich wie der Mikroaktor 81 ausgebildet ist, aber sich unter dem anderen Fluidreservoir 62 der Mikrostruktur 2 befindet.

Ein Eingang 621 und ein Ausgang 622 des Fluidreservoirs 62 sowie ein Eingang 711 des Fluidkanals 71 sind mit einer durchgängigen Deckfolie 29 beklebt. Die Deckfolie 29 ist eine Klebefolie, deren Klebkraft sich durch Wärme- und/oder Lichteinwirkung verringert. Oberhalb der Deckfolie 29 ist in einem Bereich der Mikrostruktur 2, in dem sich der Ausgang 622 des Fluidreservoirs 62 und der Eingang 711 des Fluidkanals 71 befinden, eine Wärme- und/oder Lichtdurchgangsöffnung 39 in der Hülle 3 ausgebildet.

Über die Wärme- und/oder Lichtdurchgangsöffnung 39 kann beispielsweise mittels einer LED Licht und damit Wärme auf die Deckfolie 29 gerichtet werden, wodurch deren Klebekraft nachlässt und der Ausgang 622 des Fluidreservoirs 62 und der Eingang 711 des Fluidkanals 71 geöffnet werden, wodurch ein Fluidübergang von dem Fluidreservoir 62 in den Fluidkanal 71 innerhalb der Mikrostruktur 2 geschaffen wird.

In anderen Bereichen der Mikrostruktur 2 kann jedoch auch, wie in Figur 1 schematisch gezeigt, eine feste Deckplatte 23 zwischen einem Ausgang eines Fluidkanals und/oder eines Fluidreservoirs und einem Eingang eines Fluidkanals und/oder eines Fluidreservoirs ausgebildet, sodass, wie es beispielhaft in Figur 1 zwischen einem Ausgang 712 des Fluidkanals 71 und einem Eingang 731 des Fluidkanals 73 gezeigt ist, ein fester Fluidkanals 72 den Fluidkanal 71 mit dem Fluidkanal 73 verbindet.

Der Leiterbahnträger 11 trägt neben Leiterbahnen, die hier der Übersichtlichkeit halber nicht dargestellt sind, Elektroden 24, die von einer Rückseite des Leiterbahnträgers 11 kontaktierbar sind, sowie die Elektroden 12, 13, die sich auf der Vorderseite des Leiterbahnträgers 11 befinden und der Ansteuerung der Mikroaktoren 81, 82 der Mikrostruktur 2 dienen. Über die Elektroden 24 wird die Mikrostruktur 2 von außen elektrisch kontaktiert.

Auf flächigen Bereichen einer Vorderseite des Leiterbahnträgers 11 ist eine erste Klebefolie 26 aufgebracht, auf die die Aktormembran 27 aufgeklebt ist, auf der wiederum eine zweite Klebefolie 28 aufgebracht ist, auf der schließlich das Fluidikteil 20 klebt. So ist der Leiterbahnträger 11 mit dem Fluidikteil 20 mittelbar verbunden.

Figur 2 zeigt schematisch eine Explosionsdarstellung einer weiteren Ausführungsform einer bei dem erfindungsgemäßen Analysesystem einsetzbaren Mikrofluidikvorrichtung 1.

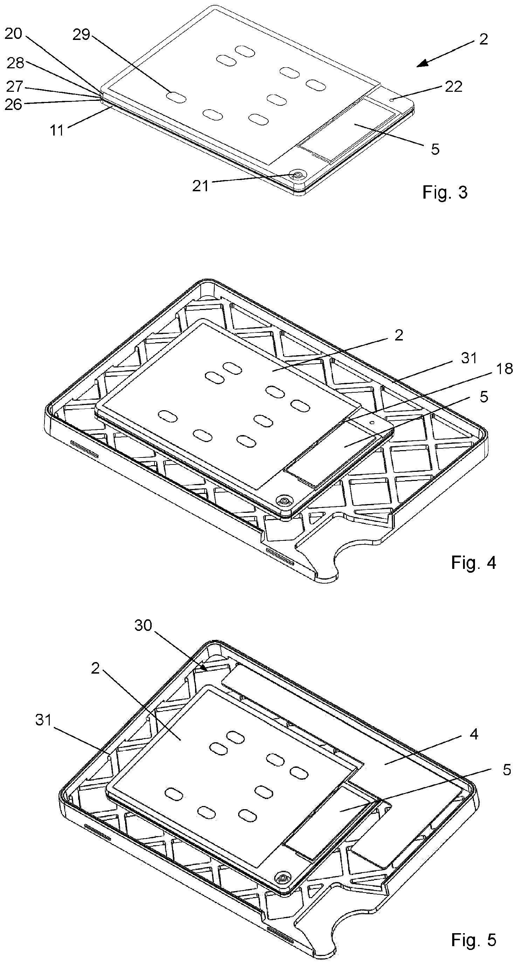

Die Mikrofluidikvorrichtung 1 weist eine Mikrostruktur 2 auf, die in Figur 3 nochmals einzeln in einer perspektivischen Ansicht von oben dargestellt ist. Die Mikrostruktur 2 kann auch als Kartusche bezeichnet werden, da in ihr die Fluidleitung der Mikrofluidikvorrichtung 1 erfolgt. Die Mikrostruktur 2 von Figur 2 ist in Form eines flachen, rechteckigen Chips ausgebildet, kann jedoch auch eine andere Form aufweisen.

Die Mikrostruktur 2 weist einen Fluideingang 21 auf, durch den ein Fluid in wenigstens einen Fluidkanal, wie beispielsweise in einen der in Figur 1 gezeigten Fluidkanäle 71, 72, 73, und/oder in wenigstens ein Fluidreservoir oder eine Kavität, wie in eines der in Figur gezeigten Fluidreservoire 61, 62, der Mikrostruktur 2 gebracht werden kann. Dabei kann das Fluid entlang des wenigstens einen Fluidkanals 71, 72, 73, gegebenenfalls mit zwischenzeitlichem Passieren des wenigstens einen Fluidreservoirs 61, 62, durch die Mikrostruktur 2 hindurch zu wenigstens einem Sensor 5 der Mikrostruktur 2 und danach zu einem Fluidausgang 22 der Mikrostruktur 2 fließen.

Der Fluidausgang 22 der Mikrostruktur 2 ist mit einem Reststoffbehälter 4 gekoppelt. Durch diese Kopplung kann überschüssiges und/oder verbrauchtes Fluid von dem Fluidausgang 22 der Mikrostruktur 2 in den Reststoffbehälter 4 fließen.

Um die Kopplung zwischen dem Fluidausgang 22 und dem Reststoffbehälter 4 zu ermöglichen, weist der Reststoffbehälter 4 eine in Figur 1 schematisch gezeigte Eingangsöffnung 41, beispielsweise in Form eines Loches im Material des Reststoffbehälters 4, auf, die sich in dem gezeigten Ausführungsbeispiel an einer Unterseite des Reststoffbehälters 4 befindet und daher in der gezeigten Perspektivdarstellung von oben nicht zu sehen ist. An der Eingangsöffnung 41 kann beispielsweise ein Klebering vorgesehen sein, um die Eingangsöffnung 41 des Reststoffbehälters 4 fest an dem Fluidausgang 22 fixieren zu können.

Der Reststoffbehälter 4 ist in dem gezeigten Ausführungsbeispiel ein Beutel aus einem flexiblen Material, kann aber in anderen, nicht gezeigten Ausführungsformen der Erfindung auch ein Reservoir mit festen Wänden sein.

In dem Reststoffbehälter 4 kann sich, wie in Figur 1 schematisch gezeigt, wenigstens ein fluidabsorbierendes Material 40 befinden.

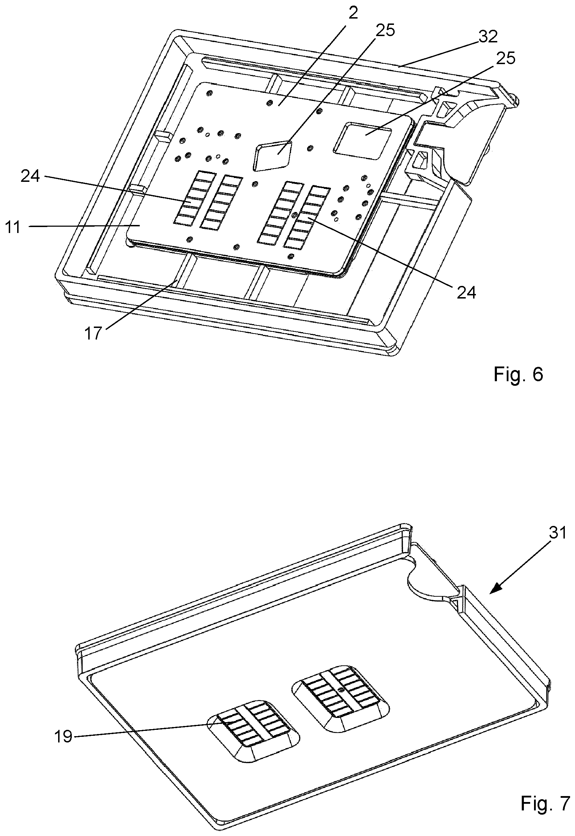

Die Mikrostruktur 2 weist in dem gezeigten Ausführungsbeispiel einen Mehrschichtaufbau auf. Sie weist zunächst einen plattenförmigen Leiterbahnträger 11 auf. Die Rückseite des Leiterbahnträgers 11 ist in Figur 6 zu sehen.

Zudem sind bei der gezeigten Ausführungsform in der Leiterbahnplatte 11 Ausschnitte 25 ausgebildet, über welchen in der Mikrostruktur 2 integrierte Blasenfallen angeordnet sind und durch welche die aus einem durch die Mikrostruktur 2 geleiteten Fluid entweichende Blasen nach außen abgeführt werden können.

Wie eine solche Blasenfalle ausgebildet sein kann, ist beispielsweise in der Druckschrift DE 10 2010 061 910 B4 beschrieben.

Auf der Leiterbahnplatte 11 klebt eine erste Klebefolie 26, mit der eine Aktormembran 27 der Mikrostruktur 2 fixiert wird. Auf der aus einer Folie ausgebildeten Aktormembran 27 klebt eine zweite Klebefolie 28, mittels welcher ein Fluidikteil 20 der Mikrostruktur 2 fixiert wird. Das Fluidikteil 20 weist den wenigstens einen Fluidkanal 71, 72, 73 auf.

In der gezeigten Ausführungsform fließt ein über den Fluideingang 21 in die Mikrostruktur 2 eingebrachtes Fluid zunächst durch das Fluidikteil 20 und aus diesem in den Sensor 5 der Mikrostruktur 2 bzw. an einer Unterseite des Sensors 5 der Mikrostruktur 2 entlang. Nachdem das Fluid den Sensor 5 passiert hat, fließt es zu dem Fluidausgang 22 und von diesem in den Reststoffbehälter 4.

In dem gezeigten Ausführungsbeispiel ist der Sensor 5 ein biologischer Sensor. Beispielsweise kann der Sensor 5 eine durchsichtige Kunststoff- oder Glaslage aufweisen, deren Unterseite mit Fängermolekülen versehen, deren optische Eigenschaften sich bei Vorliegen bestimmter Moleküle in dem Fluid ändern. Beispielsweise können solche Fängermoleküle derart ausgewählt sein, dass sie nach dem Anbinden einer Nukleinsäuresequenz, die spezifisch für einen Virus, bestimmte Bakterien, Pilze oder Pflanzen, deren Arten oder Resistenzen ist, und erforderlichenfalls nach Kontakt mit weiteren Reagenzien fluoreszieren und/oder ihre Farbe ändern. Dabei können unterschiedliche Fängermoleküle beispielsweise in einem Muster oder einem Array auf der Kunststoff-oder Glaslage angeordnet sein, sodass ortsaufgelöst optische Änderungen durch die Kunststoff- oder Glaslage detektierbar sind und somit auf bestimmte Inhaltsstoffe in dem Fluid geschlossen werden kann.

Auf das Fluidikteil 20 ist zumindest teilweise eine thermisch in ihren Klebeeigenschaften beeinflussbare Deckfolie 29 geklebt.

Die Mikrostruktur 2 und der Reststoffbehälter 4 befinden sich in einer Hülle. In der gezeigten Ausführungsform weist die Hülle ein Hüllenunterteil 31 und ein Hüllenoberteil 32 auf, die seitlich miteinander verbunden sind. Dabei ist der Reststoffbehälter 4 in einem zwischen dem Hüllenunterteil 31 und dem Hüllenoberteil 32 ausgebildeten Leerraum 30 untergebracht. In der gezeigten Ausführungsform ist dieser Leerraum 30 seitlich neben der Mikrostruktur 2 ausgebildet.

Wie es in Figur 2 zu sehen ist, befinden sich an bestimmten Stellen über der thermisch in ihren Klebeeigenschaften beeinflussbaren Deckfolie 29 Wärme- und/oder Lichtdurchgangsöffnungen 39 in dem Hüllenoberteil 32. Über diesen Wärme- und/oder Lichtdurchgangsöffnungen 39 können beispielsweise LEDs angeordnet werden. Bei Einwirkung von Wärme verliert die Deckfolie 29 an Klebkraft, wodurch sich unter der Deckfolie 29 befindliche, ohne Wärmebeeinflussung geschlossene Fluiddurchgänge öffnen können.

Somit kann die Deckfolie 29 in Kombination mit der darunter befindlichen Konstruktion der Mikrostruktur 2 als Einmal-Ventil wirken.

Die LEDs befinden sich in einem hier nicht gezeigten Extragerät, wie beispielsweise in einem Ansteuer- und/oder Auslesegerät eines Analysesystems.

Um den Sensor 5 einsehen zu können, ist zudem in dem Hüllenoberteil 32 eine Ausleseöffnung 33 ausgebildet, unter der sich im zusammengebauten Zustand der Mikrofluidikvorrichtung 1 der Sensor 5 befindet.

Um die Mikrofluidikvorrichtung 1 verdrehsicher in einem einer Ansteuerung und/oder Auslesung der Mikrofluidikvorrichtung 1 dienenden Ansteuer- und/oder Auslesegerät anordnen zu können, weist die Hülle vorzugsweise eine Verdrehsicherung auf. Diese Verdrehsicherung ist in dem Ausführungsbeispiel von Figur 2 durch unterschiedliche Dicken einer Deckplatte 34 des Hüllenoberteils 32 und entsprechend unterschiedliche Höhen eines Seitenrandes 35 des Hüllenunterteils 31 ausgebildet. So weist die Deckplatte 34 des Hüllenoberteils 32 an einem ersten Überstand 34a eine größere Dicke als an einem dem ersten Überstand 34a gegenüber liegenden zweiten Überstand 34b auf. Ferner weist der Seitenrand 35 des Hüllenunterteils 31 an einem ersten Seitenrandbereich 35a, auf dem der erste Überstand 34a bei richtigem Zusammenbau der Hülle aufliegt, eine geringere Höhe als ein dem ersten Seitenrandbereich 35a gegenüber liegender zweiter Seitenrandbereich 35b auf, auf dem bei richtigem Zusammenbau der Hülle der zweite Überstand 34b aufliegt.

Indem zusätzlich zu der oben beschriebenen Verdrehsicherheit der Mikrofluidikvorrichtung 1 in dem Ansteuer- und/oder Auslesegerät eine positionsfeste und definierte Einbringung der Mikrostruktur 2 in das Hüllenoberteil 32, wie unten im Hinblick auf Figur 6 beschrieben, vorgenommen wird, ergibt sich eine besonders vorteilhafte Toleranzkette zwischen der Mikrofluidikvorrichtung 1 und dem Ansteuer- und/oder Auslesegerät.

Das Hüllenunterteil 32 weist in der in Figur 2 gezeigten Ausführungsform seitlich Rastelemente 36 auf, in die das Hüllenoberteil 32 seitlich einrasten kann.

Ferner weist das Hüllenunterteil 31 in der gezeigten Ausführungsform an seiner der Mikrostruktur 2 zugewandten Oberseite Verstärkungsrippen 37 auf.

In dem Hüllenoberteil 32 ist oberhalb des Fluideingangs 21 der Mikrostruktur 2 eine Hülleneingangsöffnung 38 ausgebildet. In die Hülleneingangsöffnung 38 ist eine mittels eines Scharniers 92 klappbare Verschlussklappe 90 klappbar. Die Verschlussklappe 90 weist einen als Gegenstück zu dem Fluideingang 21 der Mikrostruktur 2 ausgebildeten und direkt auf den Fluideingang 21 aufsetzbaren Eingangsverschluss 9 auf. Die Verschlussklappe 90 mit dem Eingangsverschluss 9 kann in aufgeklappter Stellung in einer in dem Hüllenoberteil 32 ausgebildeten Ausnehmung 91 aufgenommen werden.

In der in Figur 2 gezeigten geschlossenen Stellung befindet sich die Verschlussklappe 90 mit dem Eingangsverschluss 9 in der Hülleneingangsöffnung 38, die in der gezeigten Ausführungsform der leichteren Handhabbarkeit halber fingerkuppenförmig ausgebildet ist.

Der Verschluss 9 ist also Bestandteil der Hülle. Wie es ferner aus Figur 2 ersichtlich ist, befindet sich bei der gezeigten Ausführungsform der Verschluss 9 in seiner Schließstellung, also dann, wenn er auf dem Fluideingang 21 sitzt, sicher in einer Senke des Hüllenoberteils 32.

Figur 4 zeigt schematisch das Hüllenunterteil 31 mit der darauf aufgesetzten Mikrostruktur 2 der Mikrofluidikvorrichtung 1 in einer perspektivischen Ansicht von oben.

In Figur 4 sieht man beispielsweise die für die Platzierung des Sensors 5 auf der Mikrostruktur 2 genutzten seitlichen Positionierhilfen 18.

Figur 5 zeigt schematisch das Hüllenunterteil 31, die Mikrostruktur 2 und den Reststoffbehälter 4 der Mikrofluidikvorrichtung 1 in einer perspektivischen Ansicht von oben.

Figur 6 zeigt schematisch das Hüllenoberteil 32 der Mikrofluidikvorrichtung 1 mit der darin eingebrachten Mikrostruktur 2 in einer perspektivischen Ansicht von unten.

Beim Zusammenbau der Mikrofluidikvorrichtung 1 kann beispielsweise die Mikrostruktur 2 gegen die Unterseite des Hüllenoberteils 32, z. B. mit Hilfe einer elastischen Gummifolie, angedrückt werden. Dabei dienen die seitlich an der Unter- bzw. Innenseite des Hüllenoberteils 32 ausgebildeten Stege 17 der Positionierung der Mikrostruktur 2 in dem Hüllenoberteil 32. Dabei liegt die thermisch in ihren Klebeeigenschaften beeinflussbare Deckfolie 29 an einer Unter- bzw. Innenseite des Hüllenoberteils 32 an.

Durch die spezielle konstruktive Ausgestaltung des Hüllenoberteils 32 wird erreicht, dass das Hüllenoberteil 32 eine geometrische Referenz für die in die Hülle eingebrachte Mikrostruktur 2 als auch für eine hier nicht gezeigte Auslesevorrichtung der Mikrofluidikvorrichtung 1 bildet, sodass beispielweise ein bestimmter Fokus eingehalten werden kann.

Figur 7 zeigt schematisch das Hüllenunterteil 31 der Mikrofluidikvorrichtung 1 in einer perspektivischen Ansicht von unten. An der gezeigten Unterseite des Hüllenunterteils 31 befinden sich elektrische Anschlüsse in Form von Elektroden 19 zur Kontaktierung der Mikrostruktur 2 von außen. Beispielsweise können mittels der Elektroden 19 die Mikroaktoren 81, 82 und/oder Pumpen und/oder Heizer der Mikrostruktur 2 angesteuert werden.

## Patentansprüche

1. Analysesystem, das eine Mikrofluidikvorrichtung (1, 1') mit einer Mikrostruktur (2), die wenigstens einen Fluideingang (21), wenigstens einen Fluidausgang (22), wenigstens einen zwischen dem wenigstens einen Fluideingang (21) und dem wenigstens einen Fluidausgang (22) verlaufenden Fluidkanal (71, 72, 73) und wenigstens einen Mikroaktor (81, 82) zum Bewegen wenigstens eines Fluids durch den wenigstens einen Fluidkanal (71, 72, 73) aufweist, und einer Hülle (3, 31, 32), in der die Mikrostruktur (2) angeordnet ist, und ein Ansteuer- und/oder Auslesegerät für die Mikrofluidikvorrichtung (1, 1') aufweist, **dadurch gekennzeichnet, dass** die Mikrostruktur (2) eine thermisch in ihren Klebeeigenschaften beeinflussbare Deckfolie (29) aufweist, die Mikrofluidikvorrichtung (1, 1') wenigstens ein mittels der Deckfolie (29) ausgebildetes thermisch aktivierbares Ventil aufweist, über dem in der Hülle (3, 31, 32) eine Wärme- und/oder Lichtdurchgangsöffnung (39) ausgebildet ist, die Hülle (3, 31, 32) eine an das Ansteuer- und/oder Auslesegerät angepasste Außenkontur aufweist, die Mikrostruktur (2) fest an einer definierten Position in der Hülle (3, 31, 32) fixiert ist und das Ansteuer- und/oder Analysegerät wenigstens eine über der jeweiligen Wärme- und/oder Lichtdurchgangsöffnung (39) anordenbare oder angeordnete, Licht emittierende Diode aufweist, wobei der wenigstens eine Fluidausgang (21) in wenigstens einen Reststoffbehälter (4) mündet, der separat von der Mikrostruktur (2) ausgebildet ist und in der Hülle (3, 31, 32) angeordnet ist, wobei der wenigstens eine Reststoffbehälter (4) ein Beutel ist und in der Hülle (3, 31, 32), neben der Mikrostruktur (2) ein Leerraum (30) ausgebildet ist, in den sich der Beutel bei dessen Befüllung ausbreitet; oder wobei der wenigstens eine Fluidausgang (21) in wenigstens einen Reststoffbehälter mündet, der separat von der Mikrostruktur (2) ausgebildet ist, wobei der Reststoffbehälter ein feste Abmessungen aufweisender Mikrokanister oder ein fester Hohlraum als Bestandteil der Hülle (3, 31, 32) ist und wobei der wenigstens eine Reststoffbehälter wenigstens eine Entlüftungsöffnung aufweist.

2. Analysesystem nach Anspruch 1, **dadurch gekennzeichnet, dass** ein Eingangsverschluss (9) des Fluideingangs (21) in der Hülle (3, 31, 32) sitzt.

3. Analysesystem nach Anspruch 2, **dadurch gekennzeichnet, dass** oberhalb des Fluideingangs (21) der Mikrostruktur (2) in der Hülle (3, 31, 32) eine Hülleneingangsöffnung mit einer mittels eines Scharniers (92) klappbaren Verschlussklappe (90) ausgebildet ist, wobei die Verschlussklappe (90) den Eingangsverschluss (9) aufweist, der als Gegenstück zu dem Fluideingang (21) ausgebildet und direkt auf den Fluideingang (21) aufsetzbar ist.

4. Analysesystem nach einem der vorhergehenden Ansprüche, **dadurch gekennzeichnet, dass** die Hülle (3, 31, 32) wenigstens eine geometrische Referenz für eine Positionierung der Mikrostruktur (2) aufweist.

5. Analysesystem nach einem der vorhergehenden Ansprüche, **dadurch gekennzeichnet, dass** in wenigstens einem Innenbereich der Hülle (3, 31, 32) wenigstens eine Positionierhilfe für die Mikrostruktur (2) ausgebildet ist.

6. Analysesystem nach einem der vorhergehenden Ansprüche, **dadurch gekennzeichnet, dass** die Hülle (3, 31, 32) aus einem Hüllenunterteil (31) und einem dazu verdrehsicher ausgebildeten Hüllenoberteil (32) zusammengesetzt ist.

7. Analysesystem nach Anspruch 6, **dadurch gekennzeichnet, dass** außen an dem Hüllenoberteil (32) unterschiedlich hohe und/oder dicke Ränder und/oder Auskragungen ausgebildet sind.

8. Analysesystem nach einem der vorhergehenden Ansprüche, **dadurch gekennzeichnet, dass** die Mikrostruktur (2) wenigstens einen in Kontakt mit dem wenigstens einen Fluid bringbaren, optisch auslesbaren Sensor (5) aufweist, und die Hülle (3, 31, 32) wenigstens an der Stelle, an der sich dieser Sensor (5) befindet, transparent ist oder eine Durchgangsöffnung aufweist.

9. Analysesystem nach einem der vorhergehenden Ansprüche, **dadurch gekennzeichnet, dass** in dem wenigstens einen Reststoffbehälter wenigstens ein fluidabsorbierendes Material (40) angeordnet ist und/oder in dem wenigstens einen Fluidkanal (71, 72, 73) ein Rückflussverhinderer angeordnet ist.

10. Analysesystem nach einem der vorhergehenden Ansprüche, **dadurch gekennzeichnet, dass** die Mikrostruktur (1, 1') einen Leiterbahnträger (11) mit Elektroden (12, 13) aufweist und der wenigstens eine Mikroaktor (81, 82) eine mit den Elektroden (12, 13) elektrisch verbundene Aktorflüssigkeit (14) und eine in Kontakt mit dem wenigstens einen Fluid bringbare, dehnbare Aktormembran (27), durch die ein jeweiliger Innenquerschnitt des wenigstens einen Fluidkanals (71, 72, 73) und/oder wenigstens eines Fluidreservoirs (61, 62) der Mikrostruktur (2) und/oder wenigstens einer Kavität der Mikrostruktur (2) veränderbar ist, aufweist.

11. Analysesystem nach einem der vorhergehenden Ansprüche, **dadurch gekennzeichnet, dass** die Hülle (3, 31, 32) wenigstens eine Öffnung für einen Zugang zur elektrischen Kontaktierung des wenigstens einen Mikroaktors (81, 82) und/oder wenigstens eines Heizers der Mikrofluidikvorrichtung (1, 1') aufweist.

12. Analysesystem nach den Ansprüchen 10 und 11, **dadurch gekennzeichnet, dass** der Leiterbahnträger (11) Elektroden (24) trägt, die von einer Rückseite des Leiterbahnträgers (11) kontaktierbar sind.

13. Analysesystem nach Anspruch 10 oder 12, **dadurch gekennzeichnet, dass** auf einer Vorderseite des Leiterbahnträgers (11) eine erste Klebefolie (26) aufgebracht ist, auf die die Aktormembran (27) aufgeklebt ist, auf der wiederum eine zweite Klebefolie (28) aufgebracht ist, auf der ein Fluidikteil (20), das den wenigstens einen Fluidkanal (71, 72, 73) und wenigstens ein Fluidreservoir (61, 62) und/oder wenigstens eine Kavität aufweist, klebt.

## Claims

1. Analysis system comprising a microfluidic device (1, 1') with a microstructure (2) which comprises at least one fluid inlet (21), at least one fluid outlet (22), at least one fluid channel (71, 72, 73) running between the at least one fluid inlet (21) and the at least one fluid outlet (22) and at least one microactuator (81, 82) for moving at least one fluid through the at least one fluid channel (71, 72, 73), and a casing (3, 31, 32) in which the microstructure (2) is arranged, and a control and/or reading device for the microfluidic device (1, 1'), **characterized in that** the microstructure (2) comprises a cover foil (29) whose adhesive properties can be thermally influenced, the microfluidic device (1, 1') comprises at least one thermally activatable valve formed by means of the cover foil (29), above which valve a heat and/or light passage opening (39) is formed in the casing (3, 31, 32), the casing (3, 31, 32) comprises an outer contour adapted to the control and/or reading device, the microstructure (2) is firmly fixed at a defined position in the casing (3, 31, 32) and the control and/or analysis device comprises at least one light-emitting diode that can be arranged or is arranged above the respective heat and/or light passage opening (39), wherein the at least one fluid outlet (21) opens into at least one waste container (4) which is formed separately from the microstructure (2) and is arranged in the casing (3, 31, 32), wherein the at least one waste container (4) is a bag and in the casing (3, 31, 32), next to the microstructure (2), an empty space (30) is formed, into which the bag expands when it is filled; or wherein the at least one fluid outlet (21) opens into at least one waste container which is formed separately from the microstructure (2), wherein the waste container is a microcanister having fixed dimensions or a fixed cavity as a part of the casing (3, 31, 32) and wherein the at least one waste container comprises at least one vent opening.

2. Analysis system according to claim 1, **characterized in that** an inlet closure (9) of the fluid inlet (21) is located in the casing (3, 31, 32).

3. Analysis system according to claim 2, **characterized in that** a casing inlet opening with a closure flap (90) that can be folded by means of a hinge (92) is formed above the fluid inlet (21) of the microstructure (2) in the casing (3, 31, 32), wherein the closure flap (90) comprises the inlet closure (9) that is designed as a counterpart to the fluid inlet (21) and can be placed directly on the fluid inlet (21).

4. Analysis system according to one of the preceding claims, **characterized in that** the casing (3, 31, 32) has at least one geometric reference for positioning the microstructure (2).

5. Analysis system according to one of the preceding claims, **characterized in that** at least one positioning aid for the microstructure (2) is formed in at least one inner region of the casing (3, 31, 32).

6. Analysis system according to one of the preceding claims, **characterized in that** the casing (3, 31, 32) is composed of a casing lower part (31) and a casing upper part (32) which is designed to be twist-proof in relation to the casing lower part (31).

7. Analysis system according to claim 6, **characterized in that** edges and/or projections of different heights and/or thicknesses are formed on the outside of the casing upper part (32).

8. Analysis system according to one of the preceding claims, **characterized in that** the microstructure (2) comprises at least one optically readable sensor (5) that can be brought into contact with the at least one fluid, and the casing (3, 31, 32) is transparent or has a through-opening at least at the location where this sensor (5) is located.

9. Analysis system according to one of the preceding claims, **characterized in that** at least one fluid-absorbing material (40) is arranged in the at least one waste container and/or a backflow preventer is arranged in the at least one fluid channel (71, 72, 73).

10. Analysis system according to one of the preceding claims, **characterized in that** the microstructure (1, 1') comprises a conductor track carrier (11) with electrodes (12, 13) and the at least one microactuator (81, 82) comprises an actuator fluid (14) electrically connected to the electrodes (12, 13) and an expandable actuator membrane (27) that can be brought into contact with the at least one fluid and by which a respective internal cross section of the at least one fluid channel (71, 72, 73) and/or at least one fluid reservoir (61, 62) of the microstructure (2) and/or at least one cavity of the microstructure (2) can be modified.

11. Analysis system according to one of the preceding claims, **characterized in that** the casing (3, 31, 32) comprises at least one opening enabling an access to the electrical contacting of the at least one microactuator (81, 82) and/or to at least one heater of the microfluidic device (1, 1').

12. Analysis system according to claims 10 and 11, **characterized in that** the conductor track carrier (11) carries electrodes (24) which can be contacted from a rear side of the conductor track carrier (11).

13. Analysis system according to claim 10 or 12, **characterized in that** a first adhesive foil (26) is applied to a front side of the conductor track carrier (11), onto which the actuator membrane (27) is glued, on which in turn a second adhesive foil (28) is applied, to which a fluidic part (20) comprising the at least one fluid channel (71, 72, 73) and at least one fluid reservoir (61, 62) and/or at least one cavity is glued.

## Revendications

1. Système d'analyse qui comprend un dispositif microfluidique (1, 1') avec une microstructure (2), qui présente au moins une entrée de fluide (21), au moins une sortie de fluide (22), au moins un canal de fluide (71, 72, 73) passant entre l'au moins une entrée de fluide (21) et l'au moins une sortie de fluide (22) et au moins un microacteur (81, 82) pour déplacer au moins un fluide à travers l'au moins un canal de fluide (71, 72, 73), et un boîtier (3, 31, 32) dans lequel la microstructure (2) est disposée, et un dispositif de commande et/ou de lecture pour le dispositif microfluidique (1, 1'), **caractérisé en ce que** la microstructure (2) présente un film de couverture (29) dont les propriétés adhésives peuvent être influencées thermiquement, le dispositif microfluidique (1, 1') comprend au moins une valve activable thermiquement formée au moyen du film de couverture (29), au-dessus de quelle valve une ouverture de passage de chaleur et/ou de lumière (39) est formée dans le boîtier (3, 31, 32), le boîtier (3, 31, 32) présente un contour extérieur adapté au dispositif de commande et/ou de lecture, la microstructure (2) est fixée solidement à un emplacement défini dans le boîtier (3, 31, 32) et le dispositif de commande et/ou d'analyse comporte au moins une diode électroluminescente qui peut être disposée ou est disposée au-dessus de l'ouverture de passage de chaleur et/ou de lumière (39) respectivement, l'au moins une sortie de fluide (21) débouchant dans au moins un récipient à résidus (4) qui est formé séparément de la microstructure (2) et est disposé dans le boîtier (3, 31, 32), l'au moins un récipient à résidus (4) étant un sac et un espace vide (30) étant formé dans le boîtier (3, 31, 32), à côté de la microstructure (2), dans lequel le sac se dilate lorsqu'il est rempli ; ou l'au moins une sortie de fluide (21) débouchant dans au moins un récipient à résidus qui est formé séparément de la microstructure (2), le récipient à résidus étant un microbidon de dimensions fixes ou une cavité fixe comme partie du boîtier (3, 31, 32) et l'au moins un récipient de résidus possédant au moins une ouverture de ventilation.

2. Système d'analyse selon la revendication 1, **caractérisé en ce que** une fermeture d'entrée (9) de l'entrée de fluide (21) se trouve dans le boîtier (3, 31, 32).

3. Système d'analyse selon la revendication 2, **caractérisé en ce que** au-dessus de l'entrée de fluide (21) de la microstructure (2) dans le boîtier (3, 31, 32) une ouverture d'entrée du boîtier avec un volet de fermeture (90) rabattable au moyen d'une charnière (92) est formée, le volet de fermeture (90) comprenant la fermeture d'entrée (9), qui est conçue comme une contrepartie de l'entrée de fluide (21) et peut être placée directement sur l'entrée de fluide (21).

4. Système d'analyse selon l'une des revendications précédentes, **caractérisé en ce que** le boîtier (3, 31, 32) présente au moins une référence géométrique pour positionner la microstructure (2).

5. Système d'analyse selon l'une des revendications précédentes, **caractérisé en ce que** au moins une aide au positionnement de la microstructure (2) est formée dans au moins une zone intérieure du boîtier (3, 31, 32).

6. Système d'analyse selon l'une des revendications précédentes, **caractérisé en ce que** le boîtier (3, 31, 32) est composé d'une partie inférieure (31) de boîtier et d'une partie supérieure (32) de boîtier résistante à la torsion.

7. Système d'analyse selon la revendication 6, **caractérisé en ce que** des bords et/ou des saillies de différentes hauteurs et/ou épaisseurs sont formés à l'extérieur de la partie supérieure du boîtier (32).

8. Système d'analyse selon l'une des revendications précédentes, **caractérisé en ce que** la microstructure (2) présente au moins un capteur (5) lisible optiquement et pouvant être mis en contact avec l'au moins un fluide, et le boîtier (3, 31, 32) est transparent ou présente une ouverture traversante au moins à l'endroit où se trouve ce capteur (5).

9. Système d'analyse selon l'une des revendications précédentes, **caractérisé en ce que** au moins un matériau (40) absorbant les fluides est disposé dans l'au moins un récipient à résidus et/ou un clapet anti-retour est disposé dans l'au moins un canal de fluide (71, 72). , 73).

10. Système d'analyse selon l'une des revendications précédentes, **caractérisé en ce que** la microstructure (1, 1') comporte un support de pistes conductrices (11) avec des électrodes (12, 13) et l'au moins un microacteur (81, 82) présente un fluide d'actionnement (14) raccordé électriquement avec les électrodes (12, 13) et une membrane d'actionnement (27) extensible qui peut être mise en contact avec l'au moins un fluide et à moyen de laquelle une section transversale intérieure respective de l'au moins un canal de fluide (71, 72, 73) et/ou au moins un réservoir de fluide (61, 62) de la microstructure (2) et/ou au moins une cavité de la microstructure (2) peuvent être modifiées.

11. Système d'analyse selon l'une des revendications précédentes, **caractérisé en ce que** le boîtier (3, 31, 32) présente au moins une ouverture pour accéder à la mise en contact électrique de l'au moins un microacteur (81, 82) et/ou d'au moins un réchauffeur du dispositif microfluidique (1, 1').

12. Système d'analyse selon les revendications 10 et 11, **caractérisé en ce que** le support de pistes conductrices (11) porte des électrodes (24) qui peuvent être contactées depuis un côté arrière du support de pistes conductrices (11).

13. Système d'analyse selon la revendication 10 ou 12, **caractérisé en ce que** sur une face avant du support de piste conductrice (11) une première feuille adhésive (26) est appliquée, sur laquelle la membrane d'actionnement (27) est collée, sur laquelle à son tour une deuxième feuille adhésive (28) est appliqué, sur laquelle une partie fluidique (20) est collé, qui comprend l'au moins un canal de fluide (71, 72, 73) et au moins un réservoir de fluide (61, 62) et/ou au moins une cavité.
